# EUROPEAN PATENT APPLICATION

(11) **EP 4 406 653 A1**
(43) Date of publication of application: **31.07.2024**
(21) Application number: 23153658.2
(22) Date of filing: 27.01.2023
(51) Int. Cl.: B01L 3/00

(54) **RAPID TEST DEVICE**

(71) Applicant: Feral GmbH, 10997 Berlin (DE)
(72) Inventor: von Hauswolff, Filip, 10405 Berlin (DE); Kössler, Franziska, 81679 München (DE); La Manna, Fabio, 10437 Berlin (DE); Hosseinizad, Seyedehtara, 10587 Berlin (DE); Rapti, Eirini, 10405 Berlin (DE); Adornetto, Gianluca, 10997 Berlin (DE)
(74) Representative: Gulde & Partner

(57) **Abstract**

The present disclosure refers to a rapid test device (1000) for detecting a target analyte in a saliva sample. The rapid test device (1000) includes an elongate housing (10) forming an interior channel extending in a flow direction (F). A lateral flow test strip (20) for detecting the target analyte being is accommodated in the elongate housing (10) and extending along the channel in flow direction (F), wherein the lateral flow test strip (20) includes a sample pad (22). A saliva receiving port (30) at an end portion of the elongate housing (10) is configured to receive the saliva sample directly from a mouth of a user. A sample collection cavity (40) extending from the saliva receiving port (30) in the flow direction (F) for collecting the saliva sample received through the saliva receiving port (30). The sample pad (22) of the lateral flow test strip (20) extends into the sample collection cavity (40) to receive saliva collected in the sample collection cavity (40).

## Description

### Field of the Disclosure

The present disclosure relates to a rapid test device for detecting a target analyte in a saliva sample.

### Technological Background

Lateral flow assays, LFA, or in other words lateral flow stripes are used to detect a target analyte without substantial lab equipment. LFAs are commonly operated in hospitals or clinical laboratories for qualitative detection of specific antigens in saliva samples. There is also a growing demand for using LFAs in home-based environment. Example target analytes reach from detecting fertility hormones, antigens of corona or flu viruses but are not restricted thereto.

LFAs typically include a plurality of pads coupled to each other which laterally transport a sample fluid along the pads and causing the sample fluid to perform selected biochemical reactions eventually indicating a positive or negative test result related to the presence or absence of the target analyte.

According to typical test settings known in the field, a swab is used to perform a throat swab for collecting saliva from the throat of the user. The collected saliva is then dipped into an extraction solution and mixed therewith. After a certain time, several drops of the mixture of the extract and the saliva are then inserted to a sample port located on top of the plastic test cassette to initiate the test process.

However, the process of throat swab, mixing, extracting and the step of inserting it into the receiving port requires several steps and involves certain waiting times even before initiating the actual test. The additional waiting times in the preparation are often failed since they are often not strictly followed.

Further, the swab and the extraction solution container are additional devices that are needed to perform the test. The LFA stripe is conventionally enclosed in plastic cassettes generally using acrylonitrile butadiene styrene, ABS, polystyrene, PS, or polypropylene, PP, as the basic material thereby consuming a large amount of plastic causing extensive plastic waste due to the increasing use for home-based testing.

Therefore, there is a need to construe a rapid test device for detecting a target analyte in a saliva sample which can be operated more conveniently and efficiently while still ensuring testing integrity and sensitivity so that reliable results can be achieved as well as material saved. Further problems are solved as will be indicated in the below concrete description.

### Summary of invention

The invention is defined by the appended claims. The description that follows is subjected to this limitation. Any disclosure lying outside the scope of said claims is only intended for illustrative as well as comparative purposes.

According to one aspect of the present disclosure, a rapid test device for detecting a target analyte in a saliva sample is provided. The rapid test device includes an elongate housing forming an interior channel extending in a flow direction. Further, a lateral flow test strip for detecting the target analyte is accommodated in the elongate housing and extends along the channel in flow direction, wherein the lateral flow test strip includes a sample pad to transport saliva along the lateral flow test strip in the flow direction. In addition, a saliva receiving port at an end portion of the elongate housing is configured to receive the saliva sample directly from a mouth of a user. A sample collection cavity extends from the saliva receiving port in the flow direction for collecting the saliva sample received through the saliva receiving port. The sample pad of the lateral flow test strip extends into the sample collection cavity to receive saliva collected in the sample collection cavity.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a perspective view of a rapid test device according to a first embodiment of the invention.
- Fig. 2: illustrates a perspective view of a rapid test device according to a first embodiment of the invention in an exploded view.
- Fig. 3: illustrates a sectional view of the rapid test device from a side view perspective A.
- Fig. 4: illustrates a sectional view of a flow gate in a front view perspective B.
- Fig. 5: illustrates a sectional view of an overflow cavity in a front view perspective C.
- Fig. 6: illustrates a perspective view of a rapid test device according to a second embodiment of the invention.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure.". Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity.

For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a rapid test device for detecting a target analyte in a saliva sample is provided. The rapid test device includes an elongate housing forming a channel extending in the direction of flow. A lateral flow test strip to detect the target analyte is inserted in the elongate housing and is extending in the flow direction. The lateral flow test strip includes a sample pad. A saliva receiving port is disposed at an end portion of the elongate housing configured to receive the saliva sample from a mouth of the user. Further, the rapid test device includes a sample collection cavity extending from the saliva receiving port in the flow direction for collecting the saliva sample received through the saliva receiving port. The sample pad of the lateral flow test strip extends into the sample collection cavity.

Elongate implies that the housing has a longitudinal direction that is longer than wide. Furthermore, the lateral flow test strip may be in other words a lateral flow assay, LFA. Receiving the saliva from the mouth of the user may be referred as mouth collection, which means that the saliva sample is directly received from the user's mouth. That the sample pad extends into the sample collection cavity means in other words that a portion of the sample pad is located or exposed in the sample collection cavity. In other words, a portion of the sample pad is exposed to the sample collection cavity. In some embodiments, also a small portion of a conjugate pad may be exposed to the sample collection cavity.

The rapid test device provides convenient operating since the user can directly supply the saliva through the mouth via the saliva receiving port into the sample collection cavity. The sample collection cavity thus forms a reservoir to receive the saliva sample. Since the sample pad extends into the sample collection cavity, the saliva sample will contact the sample pad so that the test is initiated due to capillary transport through the sample pad. The rapid testing device works faster since less steps are required to perform the test. Such device better allows to perform the testing as part of a testing routine. In addition, fewer components are required when compared to using of a swab, applicator, liquid buffer etc.

According to an embodiment, the elongate housing may comprise at least one flow gate which protrudes inwardly into the channel toward the sample pad to reduce the area of the free space of the channel surrounding the sample pad. The flow gate acts as a flow resistance so that saliva cannot easily bypass the flow gate apart from being pulled through the sample pad by capillary action. The entering of saliva into the sample pad is thus improved so that subsequent pads receive the saliva through the sample pad. Thus, the flow gate protects from overflowing since a percentage of saliva properly entering the sample pad is increased and the amount of saliva that avoids entering the sample pad and the reaction zone of the conjugate pad is reduced. Therefore, the sensitivity of the test is improved since unreacted saliva cannot easily reach the membrane.

According to an embodiment, an inner top surface of the at least one flow gate may border with a top surface of the sample pad. In other words, the inner top surface is tight with the top surface of the sample pad. Thus, saliva that enters the space above the sample pad is forced to enter the sample pad and blocked from bypassing the flow gate at the top. Thus, sensitivity of the test result is improved since unreacted/unexposed saliva that has avoided the reaction zones in the conjugate pad is prevented from reaching test regions in the membrane of the lateral flow test strip diluting the test result.

According to an embodiment, at least one inner side surface of the at least one flow gate borders a corresponding side surface of the sample pad. In other words, the inner side surface is tight with the side surface of the sample pad. Thus, saliva that enters the space on the sides at the sample pad is forced to enter the sample pad and blocked from bypassing the flow gates at the sides. Thus, sensitivity of the test result is improved since unreacted/unexposed saliva that has avoided the reaction zones is prevented from reaching test regions of the lateral flow test strip, in particular conjugate pad and membrane.

In particular embodiments to improve the effect, both inner side surfaces and inner top surface of the at least one flow gate may border a corresponding surface of the sample pad.

According to an embodiment, the at least one flow gate borders the sample pad to be air permeable in the flow direction. Due to the air permeability, air that is inside the sample collection cavity and the channel can be evacuated when the user deposits or supplies saliva by mouth into the sample collection cavity to ease depositing of saliva through the mouth. In particular, in such embodiment, the user can receive perceptible feedback for when the sample collection cavity is full or filling up. Since saliva has a higher density than air and refers to a high viscosity fluid, it is relatively difficult for the saliva to pass through the flow gate outside of the sample pad of the lateral flow test strip. Therefore, a gentle resistance can be felt indicating the user an adequate amount of saliva.

According to an embodiment, a first flow gate among the at least one flow gate is located at end of the sample collection cavity opposite to the saliva receiving port. Thus, the first flow gate forms an end of the sample collection cavity and separates the sample collection cavity from the active biochemistry. Further, the flow gates thus help to directly feed saliva from the sample collection cavity into the sample pad.

According to an embodiment, a first and a second flow gate may be spaced apart from each other along the flow direction so to form an overflow cavity between the first and the second flow gate, wherein a venting hole may be formed in the upper portion of the overflow cavity between the first and the second flow gate. The overflow cavity may be in other words a venting chamber or ab overflow chamber. In an event that the user overcollects saliva so that the overflow cavity fills up, the venting hole may allow air to enter the overflow cavity to facilitate the drawing of saliva through the sample pad. In case of no venting hole, the movement of the saliva toward the further LFA strip pad components would be reduced or even prevented due to a low pressure generated inside such space between the flow gates. The venting hole has another effect in that if the user vastly overcollects saliva, the venting hole acts as a safety feature to prevent too much saliva from passing the second flow gate since excess saliva can escape through the venting hole thereby increasing the likelihood for a valid test result. Further, the venting hole also provides a user feedback that too much saliva was collected so that next time the amount of deposited saliva can be adjusted.

According to an embodiment, a surface area of the venting hole may be larger than an area of the free space of the channel surrounding the sample pad at the first and/or second flow gate. The surface area may be in other words a cross sectional area. This ensures that the ventilation hole offers a path of least resistance, thus venting excess saliva on top to protect the LFA component pads from a strong surge, which would otherwise flood the membrane or cause an overflow.

According to an embodiment, a third flow gate may be provided downstream of and spaced apart from the second flow gate. A third flow gate provides further redundancy to assure that the amount of saliva deposited into the sample pad is further increased and serves as a further measure for preventing overcollection of saliva.

According to an embodiment, the elongate housing may comprise an upper flow indication window positioned downstream from the at least one flow gate overlapping a conjugate pad of the lateral flow test strip. The flow indicator gives the user feedback that the test is functioning and starting due to flow indication due the reaction with the conjugate pad. This also provides information that no further saliva is required so that overcollecting can be avoided. Further, the user can still top-up the amount of saliva when no flow is detected through the flow indication window thus giving feedback to provide proper usage of the device.

According to an embodiment, the elongate housing may comprise a flat bottom sheet and a thermoformed thermoplastic top sheet coupled to the flat bottom sheet to form the elongate housing. Using thermoformed thermoplastic top sheet can reduce the amount of plastic by an order of magnitude, i.e., an amount of 70-90% of plastic can be saved compared to conventional plastic cassettes and the structures can be manufactured by hole punching in the thermoformed thermoplastic top sheet.

According to an embodiment, the thermoformed thermoplastic top sheet may include one among polyactide, PLA, polystyrene, PS, and polyethylene terephthalate, PET. Thus, using thermoformed thermoplastic top sheets implies that limitation to conventional polyethylene, PE, as being conventionally used can be overcome.

The thickness of the thermoformed thermoplastic top sheet may be 0,1 to 0,5 mm and preferably between 0,2 mm to 0,4 mm to 0.3 mm. Thus, the amount of plastic is reduced while still providing sufficient material strength.

According to an embodiment, the elongate housing may be injection molded. Such product can therefore be produced by 3D printing. Such product may meet current industry standards and may the production may be easily fitted into existing production schemes

According to an embodiment, a volume of the sample collection cavity is between 150 µl and 400µl, preferably between 200 µl and 350 µl more preferably between 250 µl and 300 µl. Such collecting volumes ensure sufficient saliva sample sizes for detecting the target analyte while preventing vast overcollection of saliva. Therefore, these volumes represent a sweet spot for collecting saliva directly from the mouth of the user.

According to an embodiment, a lateral flow test strip may comprise a cover tape on an absorption pad and a barcode printed on the cover tape, wherein the elongate housing comprises a barcode readout window which overlaps the printed barcode. Thus, a unique identifier can be provided to the rapid test device.

According to an embodiment, the lateral flow test strip may comprise a conjugate pad and a membrane, wherein a portion of the conjugate pad overlaps the membrane, and wherein the elongate housing comprises an inwardly extending contact protrusion protruding into the channel from an upper portion of the elongate housing to vertically contact the conjugate pad at a position where the conjugate pad overlaps the membrane. This ensures a stable contact between membrane and conjugate pad for providing persistent sample transfer across the pads.

According to an embodiment, a width of the saliva receiving port may be larger than a height of the saliva receiving port. A height may be for example less than 2.5 mm or more preferably less than 2 mm compared to common cassettes with a height of 4-5 mm. Such shape may better correspond to the mouth and may provide better delivery of saliva through the saliva receiving port. In addition, together with the saliva collecting cavity, a long, wide and flat geometry is provided. In this way, the surface tension created between the sample collection cavity walls and the high viscosity saliva sample is utilized, since it enables the saliva to cling inside the sample cavity with improved hygiene and handling of the saliva sample even if held upside down. This configuration ensures that no saliva leaks out of the saliva collecting port even if the rapid test device is held vertically upside down. If the sample collection cavity volume were distributed more evenly between width and height the saliva would readily slide out. Thus, this feature makes hygienic handling of the device possible despite of the lack of a collection pad or other intermediate medium for the sample to be deposited in.

### Specific Embodiments

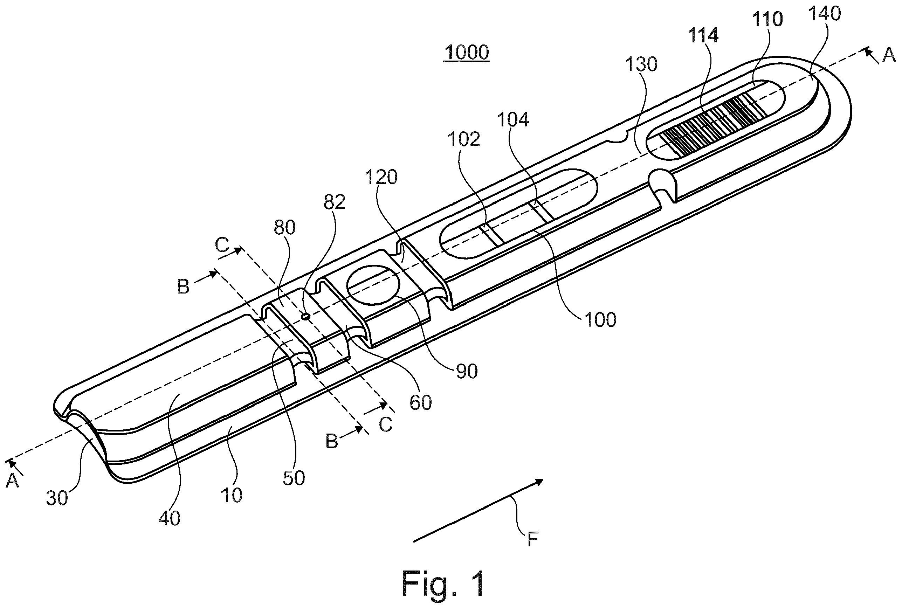

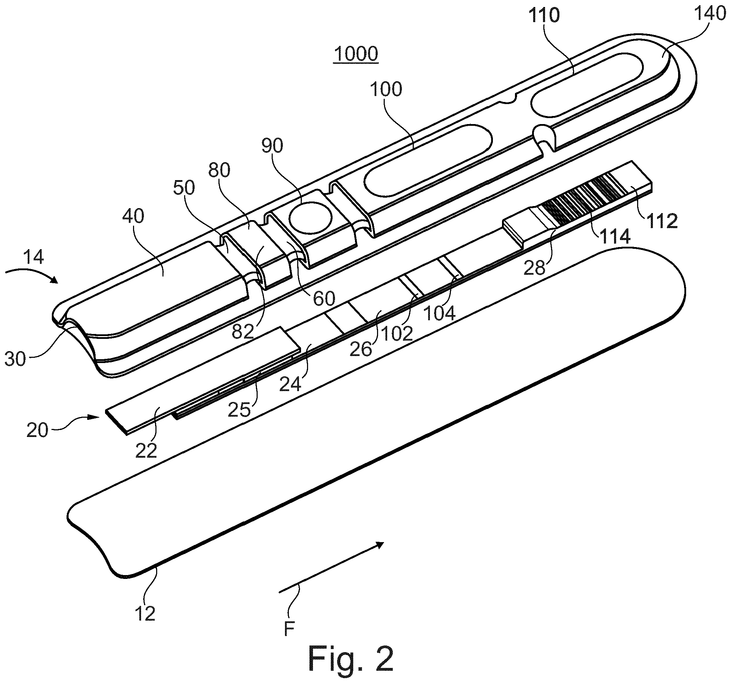

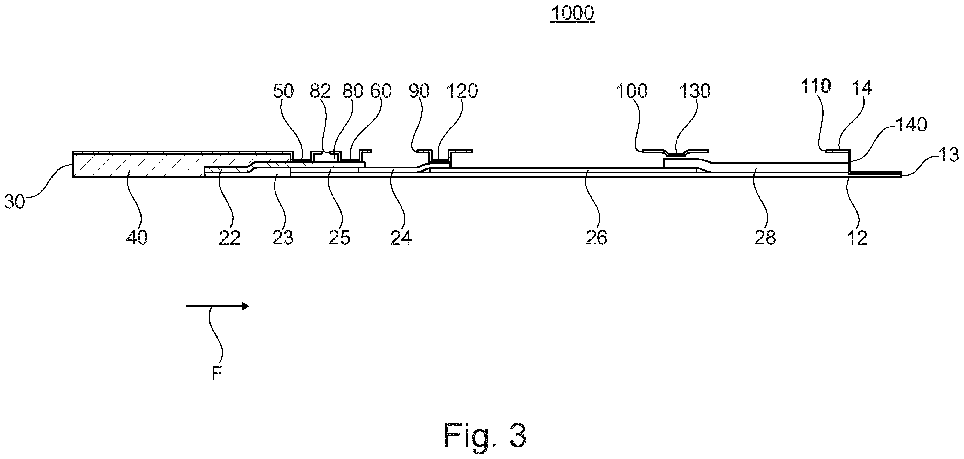

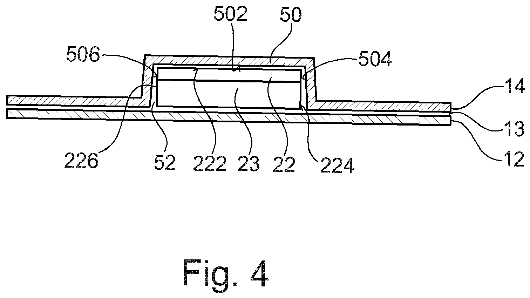

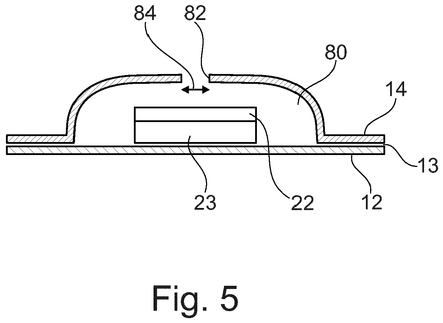

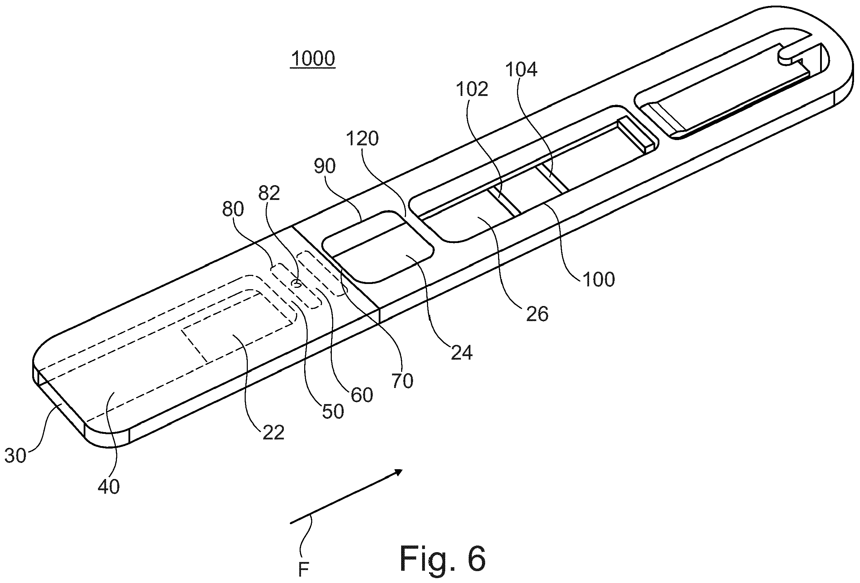

Fig. 1 illustrates a perspective view of a rapid test device 1000 according to a first embodiment of the invention. Fig. 2 refers to an exploded view thereof. Fig. 3 provides a sectional view A of the same rapid test device 1000 from a side view perspective. Figs. 4 and 5 illustrate sectional views B and C of flow gate 50 and overflow cavity 80 in a front view perspective, respectively. Fig. 6 illustrates a perspective view of a rapid test device 1000 according to a second embodiment of the invention.

In the following, a rapid testing device 1000 will be described according to Figs. 1 to 3 with providing references to Figures 4 to 6. In particular, the rapid testing device 1000 is configured to detect a target analyte in a saliva sample. Such a target analyte may be, for example, an antigen referring to viruses like flue, corona or also a hormone for fertility diagnostics, but the invention is not restricted thereto. In particular, the required saliva sample can be directly supplied from the mouth of the user into the rapid test device 1000 as will be explained below. The integrity of the testing for such device is ensured by various measures which will be demonstrated in the following.

The rapid test device 1000 includes an elongate housing 10. The elongate housing 10 forms an inner channel which extends in a flow direction F. The flow direction F is a longitudinal direction of the housing 10 in which the elongate housing 10 is extending as indicated in the Figs. 1 to 3.

A lateral flow test strip 20 for detecting the target analyte in the saliva sample is accommodated inside of the elongate housing 10. In particular, the lateral test strip 20 is held inside the channel of the elongate housing 10 and aligned to extend in the flow direction F. An example lateral flow test strip 20 disposed inside the elongate housing 10 is disclosed in the exploded view of Fig. 2 or in the cross section of Fig. 3.

The lateral flow test strip 20 includes a sample pad 22. The sample pad 22, when receiving saliva, can transfer the received saliva in flow direction F due to capillary transport. That is, the sample pad 22 can transport the saliva toward successive component pads of the lateral flow test strip 20. The sample pad 22 may include for example a fiber material like cellulose. Functional additives may be deposited in the sample pad 22, for example, to improve the flow transport properties of the saliva and/or to be robust to saliva property fluctuations like viscosity.

The lateral flow test strip 20 may comprise several further functional pads which can be partially overlapped to provide interfaces that allow an effective flow of saliva in the flow direction F and which allow for biochemical reactions of specifically deposited molecules with the target analyte in the saliva. They can also comprise fibers like cellulose or other porous materials to facilitate capillary flow. For example, as shown in Figs. 2 and 3, the lateral flow test strip 20 may include a conjugate pad 24, a membrane 26 and an absorption pad 28. The conjugate pad 24 may include a reactive conjugate section 25 in which specific conjugate reactant molecules are stored that can bind to the target analyte, when the latter is included in the saliva that passes through the conjugate pad 24. The lateral flow test strip 20 may further include a membrane 26 to which the conjugate pad 24 is fluidly coupled. The, membrane 26 includes a test portion with at least one t line 102 (test line) which indicates the test result due to local conjugated target analyte immobilization as well as a c line 104 (control line) visually identifiable through coloring as shown in, e.g., Fig. 1. Further, an absorption pad 28, also referred to as reservoir pad or waste pad, may be provided which acts as reservoir to receive the saliva fluid after the reactions have occur to absorb the saliva. Various variants of lateral flow test strips 20 known from the prior arts may be applied to the present invention and the inventive concept does not depend on a particular embodiment of a lateral flow test strip 20 to detect the target analyte.

The rapid test device 1000 includes a saliva receiving port 30. The saliva receiving port 30 is formed at an end portion of the elongate housing 10. This offers an interaction very similar to a whistle which is very intuitive to most. In particular, first-time users can rapidly learn the sample collection as the mental model will already be there and the interaction with the rapid test device 100 can be communicated with simple diagrams or words in comparison to a cumbersome folding design. The saliva receiving port 30 can be taken into the mouth of the user and/or partially inserted into the mouth so that saliva can be directly fed into the rapid test device 1000 through the saliva receiving port 30. For example, to better match with the mouth shape of humans, the width of the saliva receiving port 30 may be larger than the height of the saliva receiving port 30 as disclosed for example in Fig. 1. A height may be for example less than 2.5 mm or more preferably less than 2 mm compared to common cassettes with a height of 4-5 mm. Thus, due to surface tension in such confined cavity, the sample collection cavity volume enables hygienic handling of the device as the saliva clings inside the sample collection cavity 40. Top and bottom walls can be distanced close enough to take advantage of the surface tension thus facilitating the saliva to remain in the sample collection cavity 40 even when held upside down.

A sample collection cavity 40 is provided which extends from the saliva receiving port 30 in the flow direction F. The sample collection cavity 40 allows to collect, i.e., to store, an amount of saliva that is received through the saliva receiving port 30. The saliva receiving port 30 is configured so that saliva can be directly supplied from the mouth of the user to the rapid test device 1000. A suitable volume of the sample collection cavity 40 may be between 150 µl and 400 µl preferably between 200 µl and 350 µl, more preferably between 250 µl and 300 µl.

These predetermined volumes can be set to limit a suitable amount of saliva, for example specific to a target analyte, that can be processed by the lateral flow test strip 20 and to provide reliable results.

A part of the sample pad 22 of the lateral flow test strip 20 is exposed in the sample collection cavity 40. In particular, this part of the sample pad 22 extends into the sample collection cavity 40 as being illustrated for example in Fig. 3. Since the sample pad 22 extends into the sample collection cavity 40, saliva that is deposited in the sample collection cavity 40 and collected therein directly via the mouth of the user through the saliva receiving port 30 can enter the sample pad 22 and thus be transported by capillary forces in flow direction F. In particular, the transported saliva can reach successive pads 24, 26, 28, e.g., as described above, to provide test results regarding the specific target analyte. Thus, an easy to use and conveniently fast saliva test is provided without need of additional processing steps.

To provide an improved sensitivity, e.g., reducing false negatives, of the saliva testing and to increase robustness against incorrect use or misuse as well as ensuring successful outcome for a higher percentage of tests administered, several constructive measures may be integrated which are explained in the following. In particular, the elongate housing 10 may comprise at least one flow gate 50, 60, 70 positioned at the end and/or downstream from the sample collection cavity 40. The at least one flow gate 50, 60, 70 is located above the sample pad 22, i.e., at a designated position of or with respect to the sample pad 22. In the specific example as shown in Figs. 1-3, two of such flow gates 50, 60, i.e., a first flow gate 50 and second flow gate 60 are provided as shown in Figs. 1 to 3.

In geometric terms, the at least one flow gate 50, 60, 70 protrudes inwardly into the channel toward the sample pad 22. Thereby the flow gate 50, 60, 70 reduces the free area 52 of the channel surrounding the sample pad 22. This feature will be described in more detail with respect to Fig. 4 below. Thus, the flow gate 50, 60, 70 according to the invention constricts or narrows the free area 52 of the space surrounding the sample pad 22 when viewed in flow direction F as shown in Fig. 4. Therefore, the flow gates 50, 60, 70 cause a resistance to freeflowing saliva and force the saliva to enter the sample pad 22 at these flow gates to regulate the saliva sample transfer to the conjugate pad 24 and prevent to populate or flood the membrane 26 with unreacted saliva which may dilute test results and increase the risk of false negatives.

As can be seen in Figs. 1 to 3, a first flow gate 50 is located at end of the sample collection cavity 40 opposite to the saliva receiving port 30. Thus, the first flow gate 50 defines the end part of the sample collection cavity 40. The first flow gate 50 thus supports that the saliva stored in the sample collection cavity 40 to directly enter the sample pad 22 and separates the sample collection cavity 40 from the parts of the lateral flow strip 20 where the chemical reaction take place.

Referring to Fig. 4 of the disclosure, the flow gate 50 will now be described in more detail accordingly in relation to the sample pad 22. The flow gate 50 described in Fig. 4 can be the first flow gate 50 as described above but can also be any of the other flow gates 60, 70 among the at least one flow gate 50, 60, 70.

According to Fig. 4, an inner top surface 502 of the flow gate 50 borders, i.e., is tight, with a top surface 222 of the sample pad 22. In addition, as shown in Fig. 4, an inner side surface 504, 506 of the at least one flow gate 50 borders, i.e., is tight with, a corresponding side surface 224, 226 of the sample pad 22. Optionally, one or more supporting layers 23 may be disposed below the sample pad 22 as also shown in Fig. 3 to support initial lateral flow in flow direction F.

In more different words, the outer surface of the sample pad 22 fits or corresponds geometrically with the inner surface of the flow gate 50. Thereby, the flow gate 50 forces the saliva to enter the sample pad 22 and to provide resistance for penetrating the flow gate 50 without entering the sample pad 22. Thus, the constriction reduces the free surrounding free area 52 of the sample pad 22 to reduce the amount of free bypassing saliva which may dilute the test result.

Further, the flow gate 50 borders the sample pad 22 to be air permeable in the flow direction F. This can for example be seen in Fig. 4 in which a free area 52 between the sample pad 22 and the flow gate 50 is reserved. Thus, evacuation of air inside the channel is facilitated and the user can receive perceptible feedback for when the sample collection cavity 40 is filling up. In different embodiments, at least one of the surfaces may be in direct contact or even (slightly) pressed with limited force onto the sample pad 22 as long as an air permeability on one of the sides of the sample pad 22 is still provided.

Referring back to Figs. 1 to 3, the rapid test device 1000 may include a first and a second flow gate 50, 60 spaced apart from each other along the flow direction F. The first and second flow gate 50, 60 together form the boundary of an overflow cavity 80 between the first and the second flow gate 50, 60.

A cross section of the overflow cavity 80 is disclosed in Fig. 5, which refers to the viewing perspective as indicated by C in Fig. 1. A venting hole 82 is formed in an upper portion of the overflow cavity 80 between the first and the second flow gate 50, 60. As can be seen in Fig. 5, the section or free area between the first and second flow gate is wider than at the flow gate 50 as shown in Fig. 4.

The overflow cavity 80 offers an additional volume into which excess saliva can fill. Without it, i.e., if the channel is entirely narrow, the overflow would rapidly shoot along the length of the lateral flow strip 20.

Since due to the venting hole 82 air can be exchanged, the venting hole 82 supports that saliva is sufficiently drawn into and through the sample pad 22. In addition, it protects the testing integrity from too much saliva since excess saliva building up in the overflow cavity 80 may exit through the venting hole 82 to increase the testing integrity in case of overcollection. Further, the user receives adjustive feedback of having overcollected saliva so that in consecutive uses less saliva should be supplied.

The surface area 84, or in other words section area, can have predetermined size. In particular, the surface area 84 of the venting hole 82 can be set to be larger than the free area 52 of the space of the channel surrounding the sample pad 22 at the first and/or second flow gate 50, 60. This facilitates that the venting hole 82 becomes a path of least resistance compared to the flow gates 50, 60 so minimize transfer of saliva in case of overcollection that potentially floods the membrane and thus would dilute the test result.

Referring back to Figs. 1 to 3 in view of Fig. 6, the rapid test device 1000 may comprise (not shown in Figs. 1-3 but in Fig. 6) a third flow gate 70 downstream of and spaced apart from the second flow gate 60. The third flow gate 70 induces further redundancy and increases the amount of saliva fed into the sample pad 22 and further secures the test in case of overcollection.

To provide further control feedback to the user, the following measures can be integrated as shown in Figs. 1-3. For example, the elongate housing 10 comprises an upper flow indication window 90 positioned downstream from the at least one flow gate 50, 60, 70 and overlapping the conjugate pad 24 of the lateral flow test strip 20. In particular, the flow indication window 90 may be positioned downstream of the reactive conjugate section 25 of the conjugate pad 24. Such flow indication window 90 is essence visually indicates to the user whether (reacted) saliva has successfully flown on and through the conjugate pad 24 or not. The flowing saliva may have a color after interacting with the conjugate pad 24, in particular, with the reactive conjugate section 25 coloring the saliva. Thus, the user receives information on whether there is further need for saliva depending on whether the flow is detected or not. It also can act as an indicator for a time scale of when the test result can be expected.

Furthermore, a portion of the conjugate pad 24 may overlap with the membrane 26 as can be seen in Fig. 3. The elongate housing 10 comprises a first inwardly extending protrusion 120 protruding into the channel from an upper portion of the elongate housing 10 to vertically contact the conjugate pad 24 at a position where the conjugate pad 24 overlaps the membrane 26. This leads to a pressure point which facilitates consistent flow rates across the pad transition due to a stable contact between the pads 24, 26.

In addition, a second inwardly extending protrusion 130 may be provided to exert pressure on the absorption pad 28 and the membrane 26 at a location where the membrane 26 and the absorption pad 28 overlap each other. This is for example disclosed in the cross section of Fig. 3. This leads to a pressure point which facilitates consistent flow rates across the pad transition due to a stable contact between the pads 26, 28.

To support the inserted lateral flow test strip 20, an end wall 140 is provided at an end of the opposite to the saliva collection port 30. A test readout window 100 is included which allows the user to interpret the test results according to the color indication at a c line 104 and a t line 102, for example. In other embodiments, an LFA reader may be used to interpret the results. The invention is not restricted to colorimetric reading of the lateral flow test strip 20 but fluorescence or other detection methods could be used.

The lateral flow test strip 20 may comprise a cover tape 112 on the absorption pad 28 of the lateral flow test strip 20. A barcode 114 may be printed on the cover tape 112. In correspondence, the elongate housing 10 comprises a barcode readout window 110 which overlaps the printed barcode 114. In this manner, a unique identifier of the rapid test device 1000 can be provided and suitably integrated in the rapid test device 1000.

The above described features can be accompanied with a reduction of weight and reduction of amount of plastic as described in the following. As shown in the exploded view in Fig. 2, the elongate housing 10 may comprise a flat bottom sheet 12, preferably a sticker, and a thermoformed thermoplastic top sheet 14. The flat bottom sheet 12 may be made of a natural fiber to further reduce the plastic content within the rapid test device 1000. In other words, the top sheet 14 and the structures therein are the result of a thermoforming process. The thermoformed thermoplastic top sheet 14 is coupled, for example by adhesion or welding, to the flat bottom sheet 12 to form the elongate housing 10. Using an adhesive 13 as shown in the various Figures has the further advantage of sealing of the bottom of the lateral flow test strip 20 against leaking capillary draw. Further, the flat bottom sheet 12 may be water-proof.

When using thermoformed thermoplastic, the amount of plastic can be reduced compared to commonly known cassettes. In particular, polypropylene can be avoided and instead, for example, biodegradable materials used. Preferred materials for the thermoplastics include polyactide, PLA, polystyrene, PS, and polyethylene terephtalate, PET. A thickness of 0,1 to 0,5 mm and preferably between 0,2 mm to 0,4 mm may be applied.

Figure 6 shows a second embodiment of a rapid test device 1000 according to the invention. The details as explained above apply also to the present embodiment. For conciseness, only the differences to the above embodiment are described.

In this embodiment, the elongate housing 10 is injection molded. Thus, the elongate housing 10 including the lateral flow test strip 20 can be produced by using 3D printing. Such product can be readily produced by current production schemes.

In this embodiment, three flow gates 50, 60, 70 are provided to protect form overcollecting and to facilitate drawing saliva into the sample pad 22. Three flow gates 50, 60, 70 can also be applied to the first embodiment.

In summary, the presented embodiments disclose a rapid test device 1000 for detecting a target analyte in a saliva sample which are more conveniently and efficiently operated. Due to additional measures as described above, reliable testing results can be achieved by controlling the saliva flow as well as material saving.

### Reference signs

- 1000: rapid test device
- 10: elongate housing
- 12: flat bottom sheet
- 13: adhesive
- 14: thermoformed thermoplastic top sheet
- F: flow direction
- 20: lateral flow test strip
- 22: sample pad
- 222: top surface
- 224/226: side surface
- 23: supporting layer
- 24: conjugate pad
- 25: reactive conjugate section
- 26: membrane
- 28: absorption pad
- 30: saliva receiving port
- 40: sample collection cavity
- 50, 60, 70: first/second/third flow gate
- 502: inner top surface
- 504, 506: inner side surface
- 52: free area
- 80: overflow cavity
- 82: venting hole
- 90: flow indication window
- 100: test readout window
- 102: test line (t-line)
- 104: control line (c-line)
- 110: barcode readout window
- 112: cover tape
- 114: barcode
- 120: first contact protrusion
- 130: second contact protrusion
- 140: end wall

## Claims

1. A rapid test device (1000) for detecting a target analyte in a saliva sample, comprising:
an elongate housing (10) forming an interior channel extending in a flow direction (F);
a lateral flow test strip (20) for detecting the target analyte being accommodated in the elongate housing (10) and extending along the channel in flow direction (F), wherein the lateral flow test strip (20) includes a sample pad (22);
a saliva receiving port (30) at an end portion of the elongate housing (10) configured to receive the saliva sample directly from a mouth of a user;
a sample collection cavity (40) extending from the saliva receiving port (30) in the flow direction (F) for collecting the saliva sample received through the saliva receiving port (30); and
wherein the sample pad (22) of the lateral flow test strip (20) extends into the sample collection cavity (40) to receive saliva collected in the sample collection cavity (40).

2. The rapid test device (1000) according to claim 1, wherein the elongate housing (10) comprises at least one flow gate (50, 60, 70) which protrudes inwardly into the channel toward the sample pad (22) to reduce the free space of the channel surrounding the sample pad (22).

3. The rapid test device (1000) according to claim 2, wherein an inner top surface (502) of the at least one flow gate (50, 60, 70) borders with a top surface (222) of the sample pad (22).

4. The rapid test device (1000) according to one of the claims 2 to 3, wherein at least one inner side surface (504, 506) of the at least one flow gate (50, 60, 70) borders a corresponding side surface (224, 226) of the sample pad (22).

5. The rapid test device (1000) according to one of the claims 2 to 4, wherein the at least one flow gate (50, 60, 70) borders the sample pad (30) to be air permeable in the flow direction (F).

6. The rapid test device (1000) according to one of the claims 2 to 5, wherein a first flow gate (50) among the at least one flow gate (50, 60, 70) is located at end of the sample collection cavity (40) opposite to the saliva receiving port (30).

7. The rapid test device (1000) according to one of the claims 2 to 6, comprising a first and a second flow gate (50, 60) spaced apart from each other along the flow direction (F) so to form an overflow cavity (80) between the first and the second flow gate (50, 60), wherein a venting hole (82) is formed in the upper portion of the overflow cavity (80) between the first and the second flow gate (50, 60).

8. The rapid test device (1000) according to claim 7, wherein an area (84) of the venting hole (82) is larger than an area (52) of the free space of the channel surrounding the sample pad (22) at the first and/or second flow gate (50, 60).

9. The rapid test device (1000) according to one of the claims 7 to 8, further comprising a third flow gate (70) downstream of and spaced apart from the second flow gate (60).

10. The rapid test device (1000) according to one of the claims 1 to 9, wherein the elongate housing (10) comprises an upper flow indication window (90) positioned downstream from the at least one flow gate (50, 60, 70) overlapping a conjugate pad (24) of the lateral flow test strip (20).

11. The rapid test device (1000) according to one of the claims 1 to 10, wherein the elongate housing (10) comprises a flat bottom sheet (12) and a thermoformed thermoplastic top sheet (14) coupled to the flat bottom sheet (12) to form the elongate housing (10).

12. The rapid test device (1000) of claim 11, wherein the thermoformed thermoplastic top sheet (12) includes one among polyactide, PLA, polystyrene, PS, and polyethylene terephthalate, PET, and/or has a thickness of 0,1 to 0,5 mm and preferably between 0,2 mm to 0,4 mm.

13. The rapid test device (1000) of one of the claims 1 to 10, wherein the elongate housing (10) is injection molded.

14. The rapid test device (1000) according to one of the claims 1 to 13, wherein a volume of the sample collection cavity (40) is between 150 µl and 400 µl, preferably between 200 µl and 350 µl, more preferably between 250 µl and 300 µl.

15. The rapid test device (1000) according to one of the claims 1 to 14, wherein a width of the saliva receiving port (30) is larger than a height of the saliva receiving port (30).
